# EUROPÄISCHE PATENTSCHRIFT

(11) **EP 0 365 866 B1**
(45) Veröffentlichungstag und Bekanntmachung des Hinweises auf die Patenterteilung: **18.11.1993**
(21) Anmeldenummer: 89118157.0
(22) Anmeldetag: 30.09.1989
(51) Int. Cl.: B60R 25/00, E05B 49/00

(54) **Zentralverriegelung für eine Mehrzahl von Einheiten und/oder Teilen einer Gesamtanlage, insbesondere Diebstahlsicherung für Kraftfahrzeuge**
Central locking device for a plurality of units and/or parts of an entire installation, in particular an anti-theft device for motor vehicles
Verrouillage centralisé pour un ensemble d'éléments et/ou de parties d'une installation globale, en particulier antivol pour véhicules automobiles

(30) Priorität: 22.10.1988 DE 3836026
(43) Veröffentlichungstag der Anmeldung: 02.05.1990
(73) Patentinhaber: ZIMMER, Hans-Joachim, D-73655 Plüderhausen (DE)
(72) Erfinder: ZIMMER, Hans-Joachim, D-73655 Plüderhausen (DE)
(74) Vertreter: Lorenz, Werner, Dipl.-Ing.

(56) Entgegenhaltungen:
- EP-A- 0 105 774
- GB-A- 2 058 200
- US-A- 4 673 914
- PATENT ABSTRACTS OF JAPAN, Band 8, Nr. 160 (M-312)[1597], 25. Juli 1984;& JP-A-59 57 049 (ISUZU JIDOSHA K.K.) 02-04-1984

## Beschreibung

Die vorliegende Erfindung bezieht sich auf eine Zentralverriegelung nach dem Oberbegriff von Anspruch 1, wie sie beispielsweise aus EP-A-0 105 774 bekannt ist.

Aus der DE-OS 25 38 496 ist eine Vorrichtung zum Blockieren bzw. Inbetriebsetzen eines mit einer elektrischen Anlage ausgestatteten Kraftfahrzeugs bekannt, bei der eine Signal-Eingabeeinrichtung und eine Signal-Verarbeitungseinrichtung so aufeinander abgestimmt sind bzw. miteinander in Wechselwirkung stehen, daß das Kraftfahrzeug nur nach Eingabe eines spezifischen Eingabe- bzw. Erlaubnissignals in Bewegung gesetzt werden kann. Bei dieser bekannten Vorrichtung wird der elektrische Stromkreis unterbrochen; die Zündanlage steht dabei jedoch ständig unter Spannung, so daß der unterbrochene Stromkreis relativ leicht überbrückt, d.h. kurzgeschlossen und damit die Diebstahlsicherung aufgehoben werden kann.

Die der vorliegenden Erfindung zugrunde liegende Aufgabe besteht - bezogen auf den Anwendungsfall Diebstahlsicherung für Kraftfahrzeuge - der bekannten Vorrichtung gegenüber darin, eine Verriegelung anzugeben, die gleichzeitig mehrere Funktionen des Kraftfahrzeugs blockiert, beispielsweise die Zündanlage und die Einspritzanlage. Darüberhinaus sollen mittels der Zentralverriegelung auch mechanische Bestandteile, wie z. B. Kofferraum und Motorhaube, und mechanische Funktionsteile, wie z.B. das Schaltgetriebe, gegen unerlaubte Öffnung bzw. Betätigung gesichert werden.

Unabhängig vom vorgenannten Anwendungsfall der Kraftfahrzeug-Diebstahlsicherung, soll die Zentralverriegelung gemäß der vorliegenden Erfindung jedoch auch in Verbindung mit Objektsicherungen, d.h. Gebäudesicherungen, und in Verbindung mit der Sicherung von Teilen einer Produktions- bzw. Fertigungsanlage einsetzbar sein.

Der Kern der vorliegenden Erfindung besteht darin, daß die Signaleingabeeinrichtung aus einem von außen aktivierbaren Signalgenerator und einem Datenverarbeitungsgerät besteht, daß das Datenverarbeitungsgerät über eine serielle Schnittstelle und eine Busleitung mit den Funktionseinheiten und/oder Anlagenbestandteilen gekoppelt ist, und daß die Funktionseinheiten und/oder Anlagenteile je einen vom Eingabesignal aktivierbaren Sende-/Empfangsteil, sowie je eine Decodier- und Ansteuerstufe für das implementierte Sperrglied aufweisen, so daß in Abhängigkeit von einem als zulässig erkannten Eingabesignal die Funktionseinheiten und/oder Anlagenbestandteile frei geschaltet oder verriegelt werden können.

Mit anderen als im Patentanspruch verwendeten Worten besteht der Kern der Erfindung darin, daß über eine Art Zentralschlüssel eine frei wählbare bzw. festlegbare Anzahl von wichtigen Anlagenteilen verriegelt werden kann, und zwar je nach Anlagenteil elektrisch oder mechanisch, und daß diese Verriegelung und die korrespondierende Entriegelung nur mittels eines ein-eindeutigen "Zugriffsschlüssels" aktivierbar ist.

Der besondere Vorteil dieser Zentralverriegerung besteht darin, daß die Verriegelung und Entriegelung nur temporär, d. h. zum Verriegeln und Entriegeln elektrisch angesteuert werden und die zu schützende Anlage während der restlichen Zeit spannungslos sein kann. Gleichzeitig kann auch während der restlichen Zeit die Bus-Leitung unterbrochen sein, z.B. für Anhänger von LKWs. Dadurch ist es insbesondere nicht möglich, daß über ein Durchtrennen der Busleitung auf die zu sichernden Teile der zu schützenden Anlage zugegriffen werden kann. Diesbezüglich soll nochmals darauf hingewiesen werden, daß die Kommunikation zwischen der Eingabeeinrichtung und einem der über die Busleitung angekoppelten Anlagenteile ausschließlich auf der Grundlage eines spezifisch codierten Signals möglich ist und Dritten somit aufgrund der Unkenntnis dieses Signals der Zugang zu den Anlagenteilen sicher verwehrt ist und bleibt.

Je nach dem, ob es sich bei den zu schützenden bzw. zu sichernden Anlagenteilen um elektrische Funktionseinheiten oder um mechanisch zu verriegelnde Anlagenteile handelt, ist ein elektrisches, beispielsweise ein Haftrelais oder ein Schrittschaltrelais enthaltendes Sperrglied bzw. ein mechanischer Verriegelungsbolzen vorgesehen, wobei letzterer in eine komplementäre Verriegelungsrast eingreift. Sowohl das Haft- bzw. Schrittschaltrelais als auch der Verriegelungsbolzen werden nur dann aktiviert, wenn die zu schützende Gesamtanlage verriegelt oder entriegelt werden soll; in der übrigen Zeit sind die Sperrglieder spannungslos, da sie - wie bereits ausgeführt - nur beim Ent- bzw. Verriegeln mit dem richtigen Signal aktiv gesteuert sind.

Der Zugang zum Signalgenerator, d.h der Zugang zur zu schützenden Anlage ist nur über ein personen- oder anwenderspezifisches codiertes Signal möglich. Die diesbezüglich einfachste Realisierung geht von einem codierten Sicherheitsschlüssel aus, also von einem mechanischen Schlüsselschalter. Eine weitere Möglichkeit besteht darin, auf den Signalgenerator mittels einer Eingabetastatur, z.B. einer Zehnertastatur nach Art eines Telefontastenfeldes zuzugreifen - der Zugang zu den zu schützenden Anlagenteilen ist dann nur möglich, wenn über diese Tastatur die richtige Zugriffsadresse eingegeben wird. Es ist jedoch auch möglich, den Signalgenerator mit einem Magnetkartenleser und -codierer zu versehen, wobei die Magnetkarte jeweils beim Verriegeln mittels eines Zufallsgenerators codiert wird, und eine Entriegelung eben nur möglich ist, wenn diese spezifisch codierte Magnetkarte auch wieder eingesteckt und als richtig erkannt ist. Ebenso ist selbstverständlich auch ein stets gleicher Code möglich.
Die Busleitung zur Verbindung der Signaleingabeeinrichtung und der zu schützenden Anlagenteile kann als normale elektrische Signalleitung oder auch als optische, d.h. Glasfasersignalleitung, ausgebildet sein. Bei Bedarf, d.h. zur Sicherung relativ weit voneinander entfernt liegender Anlagenteile kann die Ansteuerverbindung auch über eine drahtlose Funkverbindung realisiert werden, wobei dann das spezifisch codierte Eingabesignal über entsprechende Codier- und Decodier-Zusatzgeräte umgewandelt wird.

In weiterer vorteilhafter Ausgestaltung weist der Signalgenerator eine Signal-Quittierungseinrichtung auf, über die die einzelnen zu schützenden Anlagenteile jeweils einzeln bezüglich ihres aktuellen Zustands abgefragt werden können, d h. ob sie ver- oder entriegelt sind. Mittels dieser Quittierungseinrichtung ist es in Verbindung mit einer Adressiereinrichtung auch möglich, einzelne Anlagenteile zu adressieren und zu ver- und entriegeln. Damit kann beispielsweise ein komplexes Objektschutzsystem mit der Möglichkeit des Einzelzugriffs auf einen bestimmten Objektteil realisiert werden.

Bezugnehmend auf den eingangs genannten Stand der Technik kann auf der Grundlage der vorliegenden Zentralverriegelung eine Diebstahlsicherung für Kraftfahrzeuge konzipiert werden, bei der elektrische Funktionsteile, wie z.B. für die Zündanlage und die Einspritzanlage für den Motor über ein elektrisches Sperrglied, d.h. ein Haftrelais, und mechanische Funktionsteile, wie z.B. das Schaltgetriebe über ein mechanisches Sperrglied, d.h. einen Verriegelungsbolzen gesichert werden. Sowohl die elektrischen, als auch die mechanischen Sperrglieder werden dabei mittels ein und demselben Eingabesignal aktiviert, und dies gegebenenfalls auch je für sich.

Die erfindungsgemäße Zentralverriegelung wird im folgenden anhand der Zeichnung näher erläutert. Diese zeigt in
- Fig. 1: eine Prinzipdarstellung der kompletten Zentralverriegelung;
- Fig. 2: eine Prinzipdarstellung eines elektrischen Sperrgliedes;
- Fig. 3: eine Prinzipdarstellung eines mechanischen Sperrgliedes.

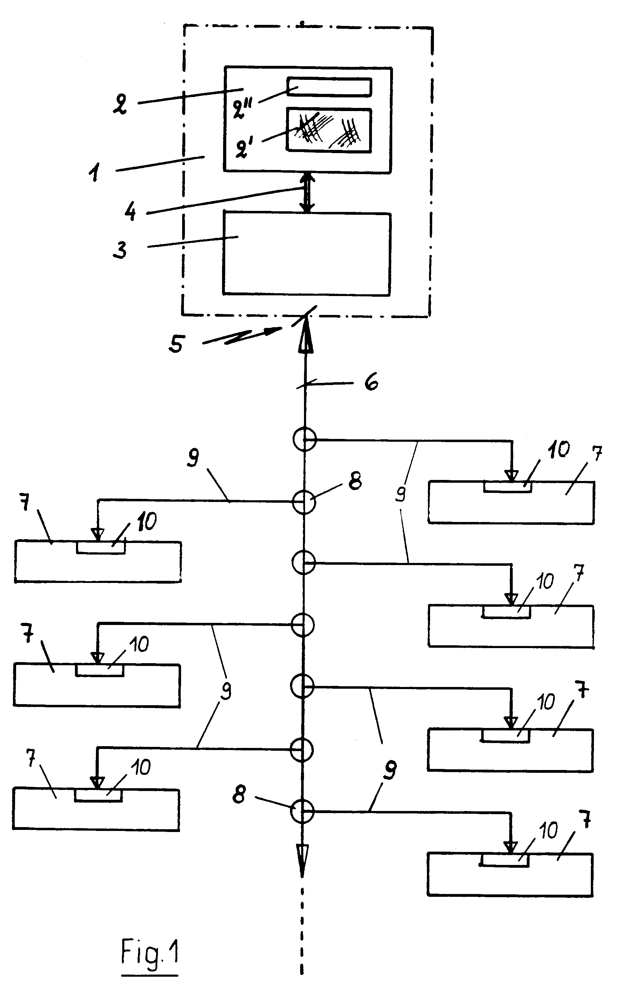

In Fig 1 ist eine modulare Signaleingabeeinrichtung 1 dargestellt, die aus einem Signalgenerator 2 und einem Datenverarbeitungsgerät 3 besteht. Der Signalgenerator 2 und das Datenverarbeitungsgerät 3 sind über eine Kommunikationsleitung 4 miteinander gekoppelt; über diese Kommunikationsleitung 4 tauschen die genannten Einheiten der Signaleingabeeinrichtung 1 Signale und Daten untereinander aus.

Das Datenverarbeitungsgerät 3 weist ausgangsseitig eine serielle asynchrone Schnittstelle (z.B. RSC 232) 5 auf, an die eine Busleitung 6 angeschlossen ist. Über die Busleitung 6 und Steuerleitungen 9, die auch als Busleitungen ausgebildet sein können, sind die Signaleingabeeinrichtung 1 und die zu schützenden Anlageteile 7 miteinander verbunden. Diese Anlagenteile 7 sind dabei jeweils über eine Verbindungsstelle 8 an die Busleitung 6 angekoppelt.

Die Funktionsweise der vorstehend anhand der einzelnen Funktionselemente beschriebenen Zentralverriegelung ist wie folgt:
Wird über einen - nicht dargestellten - Sicherheitsschlüssel, einen - ebenfalls nicht dargestellten - Magnetkartencodierer und -leser, oder eine Eingabetastatur 2′ des Signalgenerators 2 ein Eingabesignal generiert, so wird dieses Eingabesignal gleichzeitig dem Datenverarbeitungsgerät 3 übermittelt und hier in einen der Schaltlogik des betreffenden Steuerkreises 10 mit seiner Decodier- und Steuerstufe entsprechenden Code umgesetzt. Über dieses codierte Eingabesignal werden nun und zwar über die Schnittstelle 5 die einzelnen Anlagenteile 7 angesteuert.

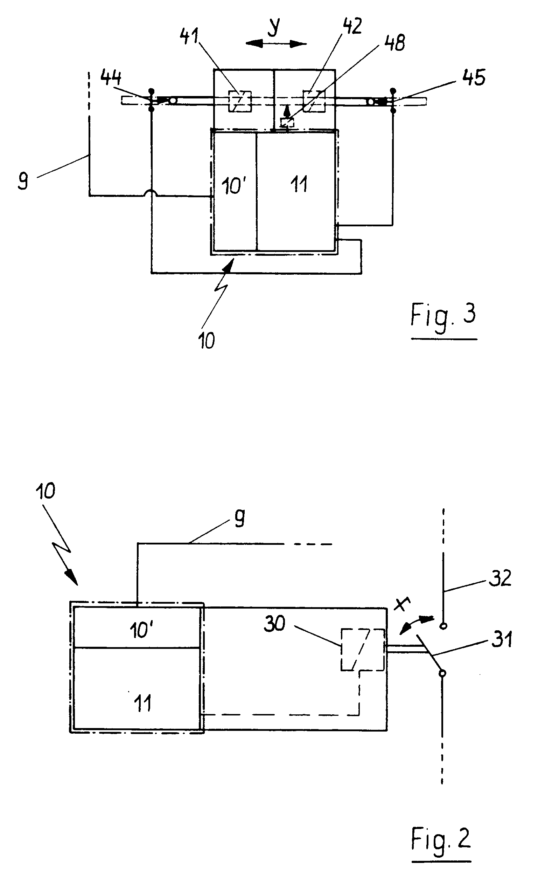

Je nachdem, ob die Anlagenteile 7 ver- oder entriegelt werden sollen, wird vor Eingabe des Eingabesignals an der Eingabetastatur 2′ dem Datenverarbeitungsgerät 3 mittels einer Funktionstaste 2'' mitgeteilt, ob das nachfolgende Eingabesignal als Verriegelungs- oder als Entriegelungssignal wirksam werden soll. Hat somit das Datenverarbeitungsgerät 3 das über die Funktionstaste 2'' eingegebene Funktionssignal erkannt und das nachfolgende, schrittweise generierte Eingabesignal zwischengespeichert, so wird dieses dann über die Schnittstelle 5 zu sämtlichen an die Busleitung 6 angeschlossenen Anlagenteilen 7 übertragen. Hier wird das im Datenverarbeitungsgerät 3 codierte Eingabesignal decodiert und in ein Aktivierungssignal für das spezifische Sperrglied des Anlagenteils 7 umgesetzt. Das Sperrglied - vgl. Fig. 2,3 - wird sodann, und zwar je nachdem ob ver- oder entriegelt werden soll, in den einen oder anderen Funktionszustand gesteuert.

Anschließend kann über eine weitere Funktionssignaleingabe, und zwar z.B. über die Eingabetastatur 2′ eine Zustandsabfrage an die Anlagenteile 7 generiert werden. Damit läßt sich sicherstellen, daß die Anlagenteile 7 sämtlich ver- oder entriegelt sind.

Wie bereits erwähnt, ist es auf der Grundlage der erfindungsgemäßen Zentralverriegelung auch möglich, Anlagenteile 7 einzeln zu verriegeln oder zu entriegeln. Dies wird dadurch möglich, daß in den vorstehend beschriebenen Vorgang zum Ver- oder Entriegeln ein Verfahrensschritt eingefügt wird. Dabei wird vor oder nach Generierung des Funktionssignals für den Befehl "Verriegeln" oder "Entriegeln" die Adresse des Anlagenteils 7 eingegeben, der ver- oder entriegelt werden soll. Über eine entsprechende Adreßeingabe und eine entsprechende Zustandsabfrage läßt sich jeweils auch jeder Anlagenteil für sich abfragen, ob er ver- oder entriegelt ist.

Die Kontrolle dieser Zustandsabfragen erfolgt dabei über ein akustisches und/oder optisches Signal, das jeweils in Verbindung mit dem aktuellen Eingabebefehl generiert wird und bestätigt, ob der Befehl ausgeführt ist oder nicht.

Der Vollständigkeit halber soll zu Fig. 1 noch nachgetragen werden, daß die Anlagenteile 7 eingangsseitig, d.h. bezüglich ihrer Verbindungsstelle mit der abgehenden Steuerleitung 9, je einen Steuerkreis 10 aufweisen. In diesem Steuerkreis 10 werden einerseits das codierte Eingabesignal, sowie das Funktionssignal und gegebenenfalls die Adreßsignale empfangen, und andererseits werden hier die Zustandssignale abgegeben.

Diese Steuerkreise 10 werden im nachfolgenden in Verbindung mit Fig. 2 und Fig. 3 erläutert, und zwar jeweils als Steuerkreis 10 zur Aktivierung eines elektrischen Sperrglieds (Fig. 2) und eines mechanischen Sperrglieds (Fig. 3).

Der Steuerkreis 10 besteht jeweils aus einem Sende-/Empfangskreis 10′, der mit der über der Verbindungsstelle 8 kommenden Steuerleitung 9 verbunden ist. Dem Sende-/Empfangskreis 10′ ist jeweils eine Decodier- und Steuerstufe 11 zugeschaltet, über die die Eingangssignale für die nachgeschalteten Sperrglieder in Steuersignale für diese Sperrglieder umgewandelt werden.

In Fig. 2 ist die Prinzipschaltung des elektrischen Sperrglieds dargestellt.

Wird ein vom Sende-/Empfangskreis 10′ empfangenes (zum Zugriff berechtigendes) Eingabesignal in der Decodier- und Steuerstufe 11 in ein Steuersignal umgesetzt, so wird dieses Steuersignal an einem Haftrelais 30 wirksam. Dieses Haftrelais 30 ist mit seinem Schaltkontakt 31 so in den Stromkreis 32 einer elektrischen Funktionseinheit eingefügt, daß mit dem Öffnen des Schaltkontakts 31 der Stromkreis 32 unterbrochen wird und aufgrund der bekannten Eigenschaften des Haftrelais 30 auch stromlos unterbrochen bleibt. Die über den Stromkreis 32 zu versorgende Funktionseinheit ist und bleibt somit stromlos und funktionsunfähig, solange das Haftrelais 30 im geöffneten Schaltzustand verbleibt - die Funktionseinheit ist somit verriegelt.

Soll dieser Verriegelungszustand wieder aufgehoben werden, so muß das Haftrelais 30 in seinen zweiten Schaltzustand überführt werden. Dies wiederum ist nur mit dem spezifischen Eingabesignal und zwar jetzt als Entriegelungssignal möglich. Über die Signaleingabeeinrichtung wird das entsprechende Signal generiert und in der Decodier- und Ansteuerstufe 11 in ein Steuersignal für das Haftrelais 30 umgesetzt. Damit geht das Haftrelais 30 in seinen zweiten Schaltzustand über, der wiederum stromlos erhalten bleibt. Bezogen auf die zeichnerische Darstellung der Schaltung bedeutet dieses, daß der Schaltkontakt 31 des Haftrelais 30 den Stromkreis 32 der angeschlossenen Funktionseinheit schließt (Pfeil X) und diese somit wieder funktionsfähig geschaltet ist.

In Fig. 3 ist die Prinzipschaltung des mechanischen Sperrglieds dargestellt.

Der Grundaufbau dieses Sperrglieds besteht aus zwei Magnetspulen 41,42 , die einen Verriegelungsbolzen 43 jeweils zwischen zwei Endstellungen hin und her zu bewegen vermögen (Pfeil Y ). Je nachdem welche der Magnetspulen 41 bzw. 42 mittels eines Steuersignals aufgrund eines Eingabesignals aktiviert wird, wird der Verriegelungsbolzen 43 von der entsprechenden Magnetspule 41 bzw. 42 angezogen. Der Hub des Verriegelungsbolzens 43 wird dabei den aktuellen, d.h. räumlichen Erfordernissen entsprechend gewählt, z.B. mit a = 100 mm. Die eine Endstellung entspricht dem Zustand "Verriegelt" - dabei greift der Verriegelungsbolzen 43 in eine komplementäre Verriegelungsrast des zu verriegelnden mechanischen Anlagenteils ein; in der zweiten Endstellung steht der Verriegelungsbolzen 43 der Verriegelungsrast gegenüber.

Die elektro-mechanische Schaltung gemäß der zeichnerischen Darstellung nach Fig. 3 ist so gewählt, daß in den Endstellungen des Verriegelungsbolzens 43 je ein Kontaktpunkt 44,45 vorgesehen ist. Werden beispielsweise die (in der Zeichnung linke) Magnetspule 41 und die zweite (rechte) Magnetspule 42 so geschaltet, daß sie je für sich im aktivierten Arbeitszustand den Verriegelungsbolzen 43 anziehen, so kann dieser Verriegelungsbolzen 43 zwischen den genannten Endstellungen und zwischen den genannten Endpunkten 44,45 linear hin und her bewegt werden.

Die vom Eingabesignal abgeleiteten Steuersignale für die Magnetspulen 41,42 werden in der Decodier- und Ansteuerstufe 11 generiert und werden, und zwar je nach dem ob es sich um einen Ver- oder Entriegelungsbefehl handelt, der einen oder der anderen Magnetspule 41 bzw. 42 zugeführt. Die Decodier- und Ansteuerstufe 11 ist mit den Magnetspulen 41,42 als gemeinsamer Baustein ausgebildet, um Eingriffe von außen zu verhindern.

Die genannten Kontaktpunkte 44,45 an denen der Verriegelungsbolzen 43 in seinen Endstellungen anschlägt, dienen zur Abfrage des Schaltzustandes des Verriegelungsbolzens 43 bzw. des zugehörigen Funktionselements. Dazu sind diese Kontaktpunkte 44,45 je für sich mit dem Sende-/ Empfangskreis 10′ verbunden, der sodann in Abhängigkeit von der aktuellen Stellung des Verriegelungsbolzens 43 ein Signal "Verriegelt" oder "Entriegelt" abgibt.

Damit der Verriegelungsbolzen 43 in seiner jeweiligen Endstellung auch sicher gehalten wird, ist zwischen den beiden Magnetspulen 41,42 zur Linearverschiebung des Verriegelungsbolzens 43 ein sogenannter Verklinkungsmagnet 48 vorgesehen. Dieser wird von der Decodier- und Ansteuerstufe 11 angesteuert und synchron mit den Magnetspulen 41,42 aktiviert.

Die im vorstehenden anhand der Zeichnungen erläuterte Zentralverriegelung soll im weiteren in Verbindung mit dem bevorzugten Anwendungsgebiet, nämlich der Sicherung eines Kraftfahrzeugs, beschrieben werden, und zwar im wesentlichen unter Bezugnahme auf die Prinzipdarstellung nach Fig. 1.

Die in Fig. 1 schematisch dargestellte Signaleingabeeinrichtung 1 sei Teil des Armaturenbretts eines Kraftfahrzeugs. Die zu schützenden bzw. zu sichernden Anlagenteile seien die Motorhaube, der Kofferraumdeckel, das Autoradio, das Getriebe, sowie die Zündung und die Einspritzanlage. Diese zu sichernden Aggregate seien die Anlagenteile 7 nach Fig. 1, wobei die mechanischen Aggregate mittels eines mechanischen Sperrgliedes (gemäß Fig. 3) und die elektrischen Funktionseinheiten mittels eines elektrischen Sperrgliedes (gemäß Fig. 2) gesichert und demzufolge mit der Signaleingabeeinrichtung 1 elektrisch gekoppelt sind.

Beim Verlassen des Kfz wird die Signaleingabeeinrichtung 1 aktiviert, wodurch die genannten Aggregate verriegelt werden. Dieser Verriegelungszustand kann nochmals abgerufen und akustisch/optisch signalisiert werden. Ist das Quittungssignal eingegangen, so kann das Kraftfahrzeug in üblicher Weise verschlossen werden.

Bei der Rückkehr zum Fahrzeug wird die Fahrzeugtür normal geöffnet. Nunmehr wird über die Signaleingabeeinrichtung 1 ein Entriegelungsbefehl generiert und automatisch (bei identifizierter Zugriffsberechtigung) an die Fahrzeugaggregate übertragen. Sobald die Quittungssignale aller nunmehr entriegelten Aggregate angezeigt sind, ist das Kraftfahrzeug startbereit.

Der Kern der vorliegenden Erfindung besteht mit einfachen Worten ausgedrückt praktisch darin, daß über einen persönlichen Identifizierungscode, also über eine Art Pass-Wort, auf ein Datenverarbeitungsgerät zugegriffen wird, in welchem dann ein systemspezifischer Herstellercode praktisch angeregt und über die serielle Busleitung zu den (und zwar sämtlichen) Funktionseinheiten und mechanischen Bestandteilen übertragen wird. Da nun niemand diesen systemspezifischen Herstellercode kennt, kann letztlich auch niemand das zur Aktivierung der Sperrglieder der Funktionseinheiten und mechanischen Bestandteile erforderliche "Ansteuersignal" extern eingeben" Dies heißt letztlich, daß auch über eine Manipulation an der seriellen Busleitung und/oder an den Steuerleitungen die nachgeschalteten Funktionseinheiten und mechanischen Bestandteile nicht aktiviert, also nicht bestimmungsgemäß benutzt, geöffnet etc. werden können. Auch wenn also die Anlage von Dieben "geknackt" wird und an den zu schützenden bzw. geschützten Einheiten Spannung angelegt wird, könnten diese Spannungen nicht zum Aktivieren der Anlage dienen, da der spezifische Herstellercode unbekannt ist und bleibt. Aus diesem Grunde kann das "Ansteuersignal" zum Freigeben der Sperrglieder auch nicht auf den Weg über die Busleitung zu den Sperrgliedern geschickt werden.

Erst aufgrund dieser speziellen und spezifischen Lösung ist es auch möglich, diese neue Zentralverriegelung (drahtlos) über Funk zu aktivieren. Während mit den üblichen Funkfernsteuerungen der "Funkverkehr" sich nur zwischen Bediener und zu steuerndem Gerät abspielt, der Ansteuerbefehl also von der Bedienerebene direkt ausgeht, erfolgt diese Steuerung gemäß der vorliegenden Erfindung durch Angabe bzw. Generierung eines Steuerbefehls, der jedoch erst systemintern in den genannten Herstellercode umgesetzt und erst anschließend als Aktivierungssignal der anzusteuernden Unterstation zugeleitet wird. Auf der Grundlage dieser Konzeption ist es beispielsweise möglich, eine Anlage, zum Beispiel einen Geldtransporter, im Gefahrenfalle aus der Ferne still zusetzen, und zwar ohne jegliche Beteiligung der Aufsichtspersonen, also zum Beispiel der Fahrer des Geldtransporters.

Der Grundgedanke liegt somit in der Spannungslosigkeit der diversen Unterstationen im entriegelten und im verriegelten Zustand. Diese Spannungslosigkeit hat nicht etwa etwas mit dem Problem einer Energieeinsparung zu tun, sondern einzig und allein damit, daß spannungslos gehaltene Schaltkreise unter keinen Umständen durch Anlegen einer Fremdspannung aktiviert werden können. Bezogen auf die vorliegende Erfindung bedeutet dies, daß auch dann, wenn jemand (unberechtigterweise) auf die Busleitung zugreift, durch Spannungszuführung zu dieser Busleitung keine einzige Unterstation "geknackt", d.h. aufgebrochen werden kann; denn da ja vorher das zur Identifizierung notwendige persönliche Pass-Wort (Identifizierungscode) nicht eingegeben worden ist, wird auch der Herstellercode nicht angeregt und gibt daher auch kein Ansteuersignal zum Entriegeln weiter. Die Entriegelung der einzelnen Stationen erfolgt also nicht durch Spannungszuführung zu den Stationen, sondern durch ein besonderes Ansteuersignal.

Auch wenn die Verwendung und bevorzugte Brauchbarkeit für Kraftfahrzeuge hier in den Mittelpunkt gestellt sind, soll abschließend doch darauf hingewiesen werden, daß mit der erfindungsgemäßen Zentralverriegelung in vorteilhafter Weise auch Objekte, wie Gebäude und komplexe Maschinenanlagen, bezüglich ihrer Teile und Komponenten gesichert werden können. Wichtig und wesentlich dabei ist die Tatsache, daß die mechanischen und elektrischen Sperrglieder vom Grundsatz her nur zum Zwecke des Ver- und Entriegelns mit Strom versorgt werden, und daß damit eine Überbrückungsmöglichkeit zwecks unerlaubter Betätigung eines Anlagenteils ausscheidet.

## Patentansprüche

1. Zentralverriegelung für eine Mehrzahl von aktiven Funktionseinheiten und/oder passiven Bestandteilen (7) einer Gesamtanlage, wie z.B. eines Gebäudes, einer Produktionsanlage oder eines Kraftfahrzeugs, mit einer Signaleingabeeinrichtung (1) zur Ver- und Entriegelung mit den Funktionseinheiten und/oder den Anlagenbestandteilen (7) gekoppelter, auf das Eingabesignal ansprechender Sperrglieder (30,43),
so daß in Abhängigkeit von einem als zulässig erkannten Eingabesignal die Funktionseinheiten und/oder Anlagenbestandteile (7) frei geschaltet oder verriegelt werden können und
daß die Signaleingabeeinrichtung (1) aus einem von außen aktivierbaren Signalgenerator (2) und einem Datenverarbeitungsgerät (3) besteht,
**dadurch gekennzeichnet,**
daß das Datenverarbeitungsgerät (3) über eine serielle Schnittstelle (5) und eine Busleitung (6) mit den Funktionseinheiten und/oder Anlagenbestandteilen (7) gekoppelt ist, und
daß die Funktionseinheiten und/oder Anlagenteile (7) je einen vom Eingabesignal aktivierbaren Sende-/Empfangsteil (10') sowie je eine Decodier- und Ansteuerstufe (11) für das implementierte Sperrglied (30,43) aufweisen.

2. Zentralverriegelung nach Anspruch 1,
zur Verwendung für elektrische Funktionseinheiten,
**dadurch gekennzeichnet,**
daß als elektrisches Sperrglied ein Haftrelais (30) oder ein Schrittschaltrelais vorgesehen sind, die im Verriegelungszustand den Stromkreis für die Funktionseinheit unterbrechen.

3. Zentralverriegelung nach Anspruch 1,
zur Verwendung für Anlagenbestandteile mit einem mechanischen Sperrglied,
**dadurch gekennzeichnet,**
daß als mechanisches Sperrglied ein Verriegelungsbolzen (43) vorgesehen ist, der im Verriegelungszustand in eine komplementäre Verriegelungsrast eingreift.

4. Zentralverriegelung nach einem der Ansprüche 1 bis 3,
**dadurch gekennzeichnet,**
daß der Signalgenerator (2) über einen Schlüsselschalter, eine Eingabetastatur (2'), einen Magnetkartenleser oder dergl. aktivierbar ist.

5. Zentralverriegelung nach einem der Ansprüche 1 bis 4,
**dadurch gekennzeichnet,**
daß die Busleitung (6) als elektrische Signalleitung oder als optische Signalleitung ausgebildet ist.

6. Zentralverriegelung nach einem der Ansprüche 1 bis 4,
**dadurch gekennzeichnet,**
daß die Busleitung (6) drahtlos an die Funktionseinheiten und/oder die Anlagenbestandteile (7) ankoppelbar ist.

7. Zentralverriegelung nach einem der Ansprüche 1 bis 6,
**dadurch gekennzeichnet,**
daß der Signalgenerator (2) eine Zustandsanzeigeeinrichtung zur Quittierung der Verriegelungs- und Entriegelungszustände der einzelnen Funktionseinheiten und Anlagenbestandteile (7) aufweist.

8. Zentralverriegelung zur Verwendung bei der Sicherung von Kraftfahrzeugen nach einem der Ansprüche 2 bis 7,
**dadurch gekennzeichnet,**
daß Zünd- und Einspritzanlage über je ein elektrisches Sperrglied (30), und Motorhaube, Radiogehäuse, Kofferraum und Getriebe über je ein mechanisches Sperrglied (43) ver- und entriegelbar sind.

## Claims

1. A central locking device for a plurality of active functional units and/or passive components (7) of an entire installation such as, for example, a building, a manufacturing installation, or a motor-vehicle, with a signal-input device (1) for the locking and unlocking of locking elements (30, 43) which are connected to the functional units and/or the components of the installation (7) and are responsive to the input signal so that the functional units and/or components of the installation (7) can be released or locked in dependence on an input signal which is recognized as valid, the signal-input device (1) consisting of a signal generator (2) which can be activated externally and of a data-processing device (3), characterized in that the data-processing device (3) is connected to the functional units and/or components of the installation (7) by means of a serial interface (5) and a bus line (6), and in that each functional unit and/or component of the installation (7) comprises a respective transmitter/receiver element (10') which can be activated by the input signal, as well as a respective decoder- and control-stage (11) for the locking element (30, 43) implemented.

2. A central locking device according to Claim 1, for use for electrical functional units, characterized in that a locking relay (30) or a stepping relay is provided as the electrical locking element and, in the locking condition, breaks the electrical circuit for the functional unit.

3. A central locking device according to Claim 1, for use for components of an installation with mechanical locking elements, characterized in that a locking pin (43) is provided as the mechanical locking element and, in the locking condition, engages a complementary locking piece.

4. A central locking device according to any one of Claims 1 to 3, characterized in that the signal generator (2) can be activated by means of a key-operated switch, an input keypad (2'), a magnetic-card reader, or the like.

5. A central locking device according to any one of Claims 1 to 4, characterized in that the bus line (6) is formed as an electrical-signal conductor or as an optical-signal conductor.

6. A central locking device according to any one of Claims 1 to 4, characterized in that the bus line (6) can be connected to the functional units and/or the components of the installation (7) by radio.

7. A central locking device according to any one of Claims 1 to 6, characterized in that the signal generator (2) comprises a status-indicator device for acknowledging the locked and unlocked conditions of the individual functional units and components of the installation (7).

8. A central locking device according to any one of Claims 1 to 7 for use for the protection of motor-vehicles, characterized in that the ignition- and injection-systems can be locked and unlocked by means of respective electrical locking elements (30) and the engine bonnet, the radio housing, the boot and the transmission can be locked and unlocked by means of respective mechanical locking elements (43).

## Revendications

1. Verrouillage central pour plusieurs unités fonctionnelles actives et/ou composants passifs (7) d'une installation globale, par exemple d'un bâtiment, d'une installation de production ou d'un véhicule à moteur, comportant un organe d'entrée de signaux (1) pour verrouiller et déverrouiller des éléments de verrouillage (30, 43) couplés aux unités fonctionnelles et/ou composants de l'installation et répondant au signal d'entrée, de sorte que les unités fonctionnelles et/ou les composants (7) de l'installation peuvent être librement enclenchés ou verrouillés en fonction d'un signal d'entrée reconnu comme autorisé, l'organe d'entrée de signaux (1) comprenant un générateur de signaux (2) susceptible d'être actionné de l'extérieur et un processeur de données (3), **caractérisé** en ce que le processeur de données (3) est couplé aux unités fonctionnelles et/ou composants (7) de l'installation au moyen d'une connexion sérielle (5) et d'un bus (6), et en ce que les unités fonctionnelles et/ou composants (7) de l'installation comportent chacun un élément émetteur/récepteur (10'), susceptible d'être activé par le signal d'entrée, et chacun un étage de décodage et de commande (11) de l'élément de verrouillage (30, 43) qui lui est couplé.

2. Verrouillage central selon la revendication 1, utilisé avec des unités fonctionnelles électriques, **caractérisé** en ce qu'en guise d'élément de verrouillage, il est prévu un relais bistable (30) ou un relais pas à pas qui, dans l'état de verrouillage, interrompt le circuit électrique de l'unité fonctionnelle.

3. Verrouillage central selon la revendication 1, utilisé avec des composants d'installation pourvus d'un élément de verrouillage mécanique, **caractérisé** en ce qu'en guise d'élément de verrouillage mécanique, il est prévu une tige de verrouillage (43) qui, dans l'état de verrouillage, est engagée dans un cran complémentaire de verrouillage.

4. Verrouillage central selon l'une des revendications 1 à 3, **caractérisé** en ce que le générateur de signaux (2) est susceptible d'être activé au moyen d'un commutateur à clé, d'un clavier d'entrée (2'), d'un lecteur de cartes magnétiques ou d'un organe similaire.

5. Verrouillage central selon l'une des revendications 1 à 4, **caractérisé** en ce que le bus (6) est formé par une ligne électrique ou optique de transmission de signaux.

6. Verrouillage central selon l'une des revendications 1 à 4, **caractérisé** en ce que le bus (6) est couplé sans fil aux unités fonctionnelles et/ou composants (7) de l'installation.

7. Verrouillage central selon l'une des revendications 1 à 6, **caractérisé** en ce que le générateur de signaux (2) comporte un indicateur d'états pour donner quittance des états de verrouillage et de déverrouillage des diverses unités fonctionnelles et des divers composants (7) de l'installation.

8. Verrouillage central selon l'une des revendications 2 à 7, utilisé pour la sécurité d'un véhicule à moteur **caractérisé** en ce qu'une installation d'allumage et une installation d' injection sont verrouillées et déverrouillées chacune au moyen d'un élément de verrouillage électrique (30) et en ce qu'un capot de moteur, un boîtier de radio, un coffre à bagages et une transmission sont verrouillés et déverrouillés chacun au moyen d'un élément de verrouillage mécanique (43).
